# EUROPEAN PATENT APPLICATION

(11) **EP 1 868 278 A2**
(43) Date of publication of application: **19.12.2007**
(21) Application number: 07106532.0
(22) Date of filing: 19.04.2007
(51) Int. Cl.: H02J 13/00

(54) **An electricity-consuming appliance, in particular an electrical household appliance, and a system including said appliance**

(30) Priority: 16.06.2006 IT TO20060447
(71) Applicant: Indesit Company S.p.A., 60044 Fabriano (AN) (IT)
(72) Inventor: Aisa, Valerio, 60044, Fabriano (Ancona) (IT); Santonicola, Paolo, 60044, Fabriano (Ancona) (IT); Falcioni, Paolo, 60044, Fabriano (Ancona) (IT)
(74) Representative: Gallarotti, Franco

(57) **Abstract**

An electricity-consuming appliance (10), in particular an electrical household appliance, is designed for connection to a power mains (28), for being supplied thereby with an a.c. voltage, and comprises an electronic control system (20, 30) provided with a microcontroller (MC) operative for managing characteristic functions of the appliance (10). The appliance (10) moreover comprises:
- electrical-distribution means (33), configured for supplying to respective further autonomous electricity-consuming appliances (40) the electric power necessary for the corresponding operation, where the distribution means (33) are provided for connection to an electric-power supply cable (41) of a respective further apparatus (40),
- means for measurement of one or more electrical quantities (A1) associated to the operation of a respective further electricity-consuming appliance (40), such as, for example, the mains voltage and/or the absorbed current and/or the phase displacement angle between voltage and current and/or the power absorbed and/or the energy consumed in a given time interval.

## Description

The present invention relates to electricity-consuming appliances and has been developed with particular reference to systems of electricity-consuming household appliances connected in a network.

Network connection of electricity-consuming household appliances affords many benefits, such as, for example, the possibility of controlling and/or optimizing the consumption of electrical energy, the possibility of acquiring data for the purpose of preventive maintenance and/or technical assistance (including remote maintenance and/or assistance), simplified interaction with the user, interaction with programmable household devices (such as personal computers, palmtop devices or cellphones), and interaction with remote sites through the Internet. On the other hand, there exist difficulties that markedly limit the diffusion of electricity-consuming household appliances prearranged for network connection, basically owing to the cost of network technologies and to the lack of a universally recognized communications standard.

The aforesaid limits have been reduced via the communications technique referred to as *"power-modulation",* described, for example, in the international patent application No. WO 02/21664 and in the article *"Connecting white goods to a home network at a very low cost",* Aisa et al, International Appliance Manufacturing, 2004. The aforesaid documents describe a particular narrow-band communications system on power line, rendered highly advantageous from an economic standpoint in that it uses the same resources of the digital control system of the electrical household appliance to exchange information, through the same supply cable of the product, with an external adapter set between said supply cable and a standard current socket. Transmission of data from the electrical household appliance to the external control and/or monitoring device occurs by using, as method of binary-information coding, controlled absorption of electric power, obtained with solid-state switches, in particular triacs, whilst transmission of data from the external adapter to the electrical household appliance occurs using, as method of binary-information coding, appropriate brief interruptions in the a.c. supply voltage, once again obtained with solid-state switches, in particular triacs.

The cost of communications technology for the electrical household appliance is of the order of approximately 10 cents (on the Euro), and hence substantially negligible, but an external adapter is required, which is sometimes difficult to install, which performs the function of protocol conversion between the proprietary protocol described in the aforesaid international patent application and the standard protocol of the possible communication network present in the environment in which the electrical household appliance is installed.

The aforesaid external adapter performs the further important function of measuring the levels of energy consumption of the electrical household appliance and has been proposed also in multiple version, i.e., that is able to interface with more than one electrical household appliance, as described in WO 02/21660. In this case, the adapter is a traditional multiple current socket, to which the set of the electrical household appliances present in the vicinity must be connected, for example, the ones typically present in a kitchen.

The above solution presents the defect of being cumbersome, subject to accumulation of dust and exposed to the electrical danger associated to possible contact with liquids typically present in a kitchen. It moreover requires a connection to an appropriate user-interface system, represented, for example, by a display with keyboard, through which the user can interact with the various electrical household appliances, and this entails an evident difficulty of installation and consequently high costs.

According to power-modulation technique, the transmission of data by the adapter causes brief interruptions in the supply of the electrical household appliance, so that it is necessary for said interruptions to be appropriately spaced apart by entire voltage waves, in such a way that the electrical household appliance continues on average to be supplied properly. This requirement lowers the frequency of transmission of the information. Furthermore, the transmission of the information must preferably occur at appropriate moments, in which the impedance of the load constituted by the electrical household appliance is such as not to generate, at times corresponding to the interruptions, any significant disturbance (in the form of spurious harmonics) on the electrical network, which would render necessary installation of costly and cumbersome filtering systems.

The basic purpose of the present invention is to solve one or more of the drawbacks referred to above in relation to the prior art.

The above and other purposes still, which will emerge more clearly from what follows, are achieved, according to the present invention, by an electricity-consuming appliance and by a system of electricity-consuming appliances, in particular, domestic appliances or electrical household appliances, having the characteristics specified in the annexed claims.

The claims form an integral part of the technical teaching provided herein in relation to the invention. Briefly, the invention relates to the solution according to which a first electricity-consuming appliance is prearranged for supplying, by means of suitable distribution means, its own mains voltage to one or more second electricity-consuming appliances and for controlling at the same time, by means of suitable measuring means, electrical quantities regarding operation of said second appliance or appliances. In this way, the first appliance is able, for instance, to measure the consumption of electrical energy associated to operation of the second appliance or appliances and to detect possible situations of overload of the electrical line, for example, in the case of variations in the mains frequency and/or of possible situations of excessive local power absorption with respect to a maximum limit. Preferably, the first appliance is provided with a respective user interface, on which the results of the measurements of the aforesaid quantities can be displayed automatically or upon request of a user by operating on the interface itself.

In a particularly advantageous embodiment, the aforesaid measuring means form part of a communications arrangement that enables the first appliance to communicate with the further appliance or appliances, through the respective supply cables. In said embodiment, the aforesaid user interface can thus be used by the user to interact, not only with the control system of the first appliance, but also with the control system of the second appliance or appliances.

The first appliance can also be configured to communicate, through any home communication network and by means of any communications protocol, with possible devices and/or appliances other than the second appliances, which are able to connect up to the Internet (for example, a personal computer) and/or are equipped with respective means for interaction with the user (for example, a mobile phone).

In a particularly advantageous embodiment, the first appliance transmits information to a second appliance via the generation of controlled variations of amplitude and duration of the supply voltage, and hence in the absence of voltage interruptions. The information transmitted is encoded in the aforesaid variations, in particular in their temporal position. In said embodiment, the communication means of the first appliance comprise a transmission circuit, which includes:
- first means, for associating to a time value a piece of information to be transmitted, where said time value is comprised in a set of predetermined time values and where said predetermined time values are measured starting from the occurrence of a predetermined condition relating to the a.c. voltage of the electrical network to which the first appliance is connected;
- second means, for generating at least one variation of the a.c. voltage that can be supplied, via the aforesaid distribution means, to a respective second appliance, substantially in correspondence of the aforesaid time value.

The innovative contents of the present invention and the advantages associated thereto will emerge more clearly from the ensuing detailed description and from the annexed plate of drawings, which are provided purely by way of non-limiting example and in which:
- Figure 1 is a simplified block diagram illustrating a system of electricity-consuming appliances according to the present invention;
- Figure 2a is a schematic representation of a possible implementation of the system of Figure 1, in which a first electricity-consuming appliance exchanges digital information both with second electricity-consuming appliances, connected thereto via a physical medium, and with possible external programmable apparatuses or devices;
- Figure 2b is a schematic representation of a particular case of Figure 2a, in which the aforesaid first electricity-consuming appliance has available a modem of a GSM/GPRS type, for the purposes of interaction with other remote apparatuses and/or devices;
- Figure 3a is a block diagram that illustrates the means with which the aforesaid first electricity-consuming appliance transmits digital information to the aforesaid second electricity-consuming appliances;
- Figure 3b is a diagram that illustrates in schematic form a positive half-wave of the a.c. main voltage that supplies the system of Figure 1, distinguished by an impulsive variation of voltage generated by the aforesaid first electricity-consuming appliance for the purposes of transmission of digital information, via the means illustrated in Figure 3a, to an aforesaid second electricity-consuming appliance;
- Figure 3c is a schematic representation of a sequence of waveforms of the aforesaid mains voltage, associated to the aforesaid transmission of digital information;
- Figure 4a is a block diagram that illustrates the means via which the aforesaid first electricity-consuming appliance receives digital information transmitted by the aforesaid second electricity-consuming appliance;
- Figure 4b is a diagram that illustrates in schematic form an example of waveforms associated to the transmission of digital information appearing in Figure 4a, based upon impulsive absorptions of power within each mains cycle that are generated by the aforesaid second electricity-consuming appliance.

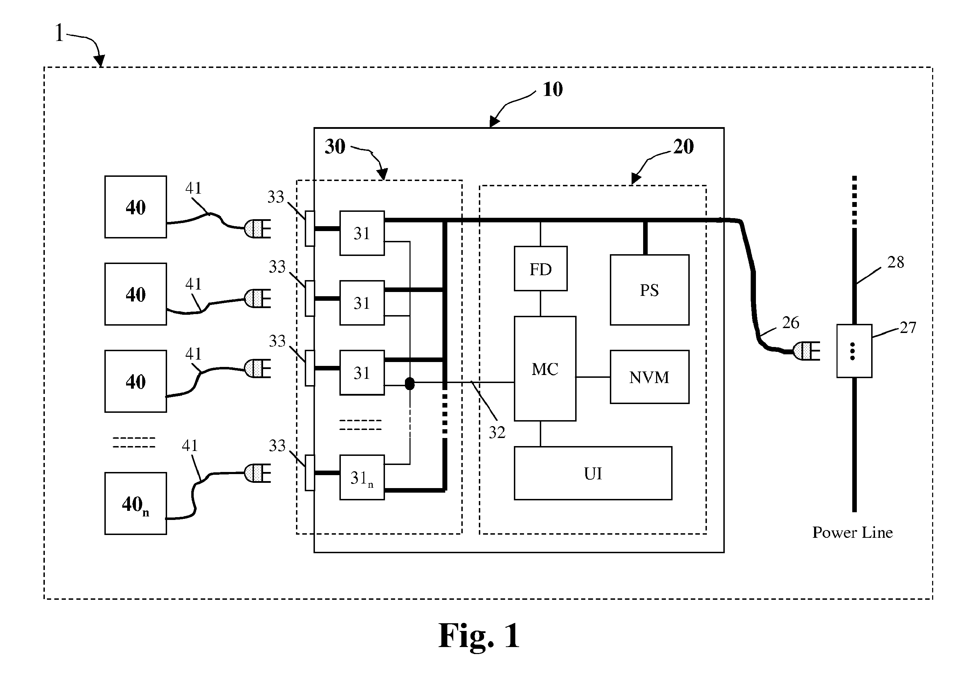

Represented schematically in Figure 1 is a system of electricity-consuming appliances according to the invention, designated as a whole by 1, which herein is assumed to be constituted by a plurality of electrical household appliances. The appliance designated by 10 is connected to the domestic electric mains 28 through its own supply cable 26 and, according to one aspect of the invention, is provided with means designed to distribute electric power to one or more of the other electrical appliances, designated by 40. In the sequel of the present description, and merely for convenience of exposition, the appliance 10 will be referred to as "main appliance", whilst each of the appliances 40 will be referred to as "interlocked appliance". It is pointed out that, irrespective of the electrical supply and the need to draw from other possible external resources, such as gas and water, the term "electricity-consuming appliance" is meant to designate electrical appliances, such as the appliances 10 and 40, which comprise all the respective known means for their normal operation, i.e., appliances which are able to perform autonomously their own characteristic functions for the benefit of a user, for example: aspiration of cooking fumes in the case of a hood, washing of dishes in the case of a dish-washer, washing and/or drying of laundry in the case of a machine for washing and/or drying laundry, control of heating/ventilation elements in the case of an oven, production of cold in the case of a refrigerator, and so forth.

The main appliance 10 is provided with a digital control system that comprises two main parts, represented by the blocks designated by 20 and 30 in Figure 1. The part 30 is configured for managing the functions proper to the appliances 10 and, in the case exemplified, comprises:
- a power supply PS, connected to the a.c. mains voltage, which is drawn from the socket 27 through the cable 26, said power supply PS being designed to generate with modalities in themselves known the d.c. voltage necessary for supplying the active devices of the digital control system;
- a microcontroller MC, pre-arranged for managing general control of the appliance 10;
- a non-volatile memory NVM, typically of an EEPROM or flash type, in which the microcontroller MC deposits and retrieves data useful for operation of the appliance 10; said memory, which can be possibly integrated within the same microcontroller MC, moreover contains data or relations used by the microcontroller for coding and/or decoding data, for the purposes of exchange of information with the outside world, as described hereinafter;
- a user interface UI, through which the user can interact with the main appliance 10, for the purposes of issuing commands and controlling operation thereof; for this purpose, the interface UI can conveniently comprise a display device, for example, of an LCD type, and means for the input of commands, instructions, data, etc., comprising, for example, a plurality of keys; as will emerge from what follows, via the interface UI the user of the main appliance 10 can also interact with the interlocked appliances 40;
- a mains-frequency detector FD, of a conception in itself known, through which the microcontroller MC is able to monitor constantly any possible fluctuations of the frequency of the mains 28, for example, according to the teachings of the document No. US-B-4,317,049, incorporated herein by reference.

Said document describes a method for detecting the load conditions of an electrical network that supplies a series of household and/or industrial appliances and that is connected to a given power station. Said method has the purpose of enabling re-balancing of any possible anomalous situations of load of the network, particularly in situations where the power absorbed by the set of electrical loads supplied by the aforesaid power station tends to be higher than what can be supplied at that same instant by the power station itself. This entails the need to activate, in the power station, auxiliary generators, thus rendering the production of the electrical energy less efficient and, consequently, the supply thereof to the various household and/or industrial appliances more burdensome. The method then envisages reduction in the levels of power absorption of the individual appliances when the mains frequency decreases by a given amount with respect to its nominal value, which is, for example, equal to 50 Hz or 60 Hz, and increase of said levels of absorption when the mains frequency tends to exceed its own nominal value. The method described implies obviously that the control system of each appliances is able to vary the power absorption of the respective electrical load, without jeopardizing correct functionality thereof.

In the specific case of the present invention, the microcontroller MC of the main appliance 10 can detect, via the detector FD, possible anomalous fluctuations of the frequency of the mains to which the system 1 is connected and signal said situation to the interlocked appliance 40 (or at least to those that are able to communicate with the microcontroller MC). In this way, the control system of the main appliance 10 and that of the interlocked appliances 40, which are able to communicate with the microcontroller MC, are in the condition of being able to regulate - on the hypothesis, of course, that the necessary means designed for the purpose are available - the power absorption of the corresponding electrical loads, in accordance with the situation of load of the electrical line. For example, in the specific case where, amongst the interlocked appliances 40 a refrigerator is present, the respective control system can decide, once the control system of the main appliance 10 has communicated thereto a situation in which the mains frequency is lower than the nominal one by a given amount, to stop the compressor and make a temporary variation of the control parameters towards higher values of the temperature within the refrigerator, so as to reduce the consumption of electric energy while it is waiting for the mains frequency to return to its nominal value. The refrigerator, having available by its very nature an internal thermal flywheel that renders the process of heating of its own compartments very slow, can sustain for several tens of minutes a forced deactivation of the compressor, without its capacity for preserving the foodstuffs undergoing any substantial degradation, thus contributing to the reduction of the absorption of electric power in regard to the electrical mains to which the refrigerator is connected. It is clear that an operation of this sort makes sense and produces the desired effects if the concept of self-regulation of consumption is shared by the thousands of other refrigerators that are supplied by the same electric power station. It should be noted that said capacity for "self-regulation" of the levels of power absorption can be implemented on various types of electrical household appliances, such as, for example, washing machines, spin-dryers, ovens, etc. (a similar technique of "self-regulation" is described, for example, in the document No. US-B-6,487,509).

The second part 30 of the control system of the main appliance 10 is managed by the microcontroller MC, through control signals represented schematically by means of the control line designated by 32, and is prearranged for:
- distributing the supply voltage to the interlocked appliances 40 through distribution devices 33; and
- managing, through communication means, a bi-directional exchange of information and/or encoded digital data with external devices or appliances, represented in the first place by the interlocked appliances 40. Said means preferably comprise a plurality of communication arrangements (transmission and/or reception), designated by 31, each of which associated to a respective distribution device.

In general terms, the microcontroller MC can be prearranged for interaction, via the communication arrangements 31, with the various interlocked appliances 40 using the techniques described in WO 02/21664 and WO 02/21660, or else using other known systems of communication on an electrical network, based upon appropriate techniques of modulation and of demodulation of the a.c. mains voltage that are proper to PLC *(Power Line Communication)* technology, or else again using any one of the other known communications systems, based, for example, on radiofrequency or on any other physical medium, for the transmission of information and/or encoded digital data, and using any known communication protocol.

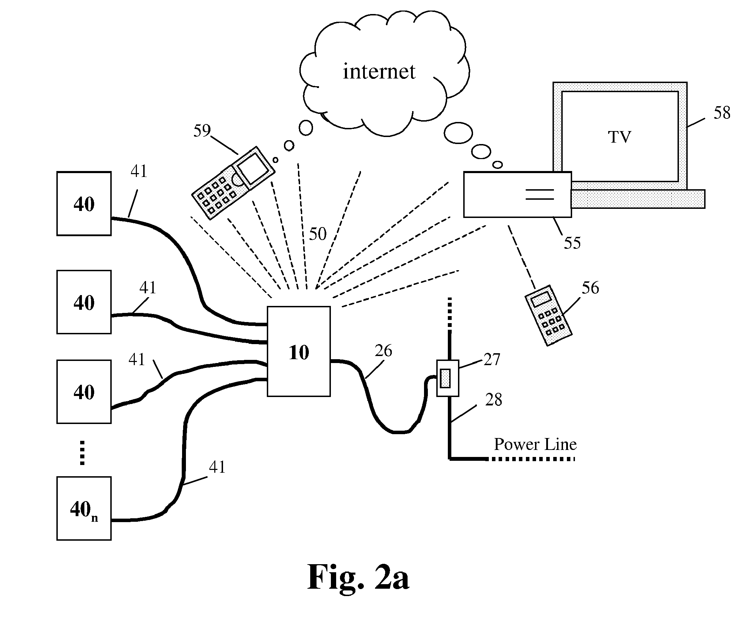

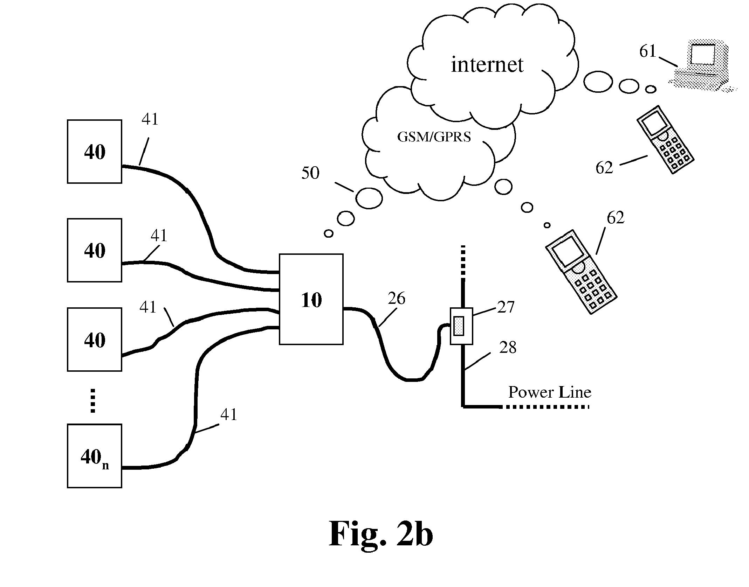

The microcontroller MC can moreover be prearranged for interaction with:
- possible apparatuses or devices 55, 59, represented in Figure 2a, equipped with appropriate user-interface means, which are in turn able to interact with remote sites through the Internet and are connected to any known home communication network. Said home network, designated as a whole by 50, can, for example, be based upon a radiofrequency communications system, or any other communications system using any other physical transmission medium, with which the microcontroller MC interacts through an appropriate communication node - not represented in the figures - able to interface in a known way with the network 50 using any known communication protocol; the network 50 can use as transmission medium, in addition to radiofrequency, any possible physical medium (electrical cable with at least two conductive wires, electric-power mains 28, IR radiation, ultrasound signals, optical fibres, etc.) usable for transmission of information between the devices or apparatuses 55, 59, possibly connected to the same communication network; said devices or apparatuses can be represented, for example, by a cellphone 59 (whose user-interface means are represented by the corresponding display and keyboard) and/or a so-called "home gateway" 55 (whose user-interface means are represented by the corresponding remote control 56 and television set 58);
- possible apparatuses or devices 61, 62, represented in Figure 2b, which are able to interact by means of GSM/GPRS wireless technology, in a direct way or through the Internet, with the control system 20, 30 of the main appliance 10, equipped for the purpose with a communication node with GSM/GPRS modem (not represented in the figures); said apparatuses or devices can be represented, by way of non-limiting example, by a personal computer 61 and cellphones 62.

The devices 33 used for distributing the electric power to the one or more interlocked appliances 40 can comprise one or more standard current sockets, each being designed to receive the current plug associated to the supply cable 41 of a respective auxiliary appliance 40, and/or one or more groups of three terminals, associated respectively to the live, neutral and earth of the power mains 28 that supplies the main appliance 10, where each of said groups of three terminals is provided for connection with the three wires of the supply cable 41 of a respective interlocked appliance.

Each of the communication arrangements 31 comprises means for measurement of one or more electrical quantities associated to operation of the interlocked appliance 40, connected to the respective device 33. In an embodiment of the invention currently deemed preferential, said measurement means are used both for gathering information regarding conditions of operation of the respective appliance 40, linked to the aforesaid electrical quantities, and for the purposes of an exchange of information between the appliance 10 and the appliance or appliances 40.

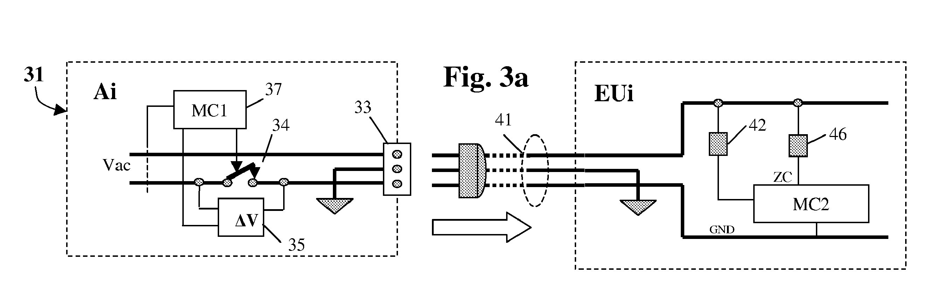

Figure 3a illustrates, by way of example, a transmission circuit Ai, forming part of each arrangement 31, used for sending information and/or encoded digital data to a corresponding appliance 40 of the system 1. Represented in the same figure is a respective receiver circuit EUi belonging to a communication arrangement of the appliance 40 considered.

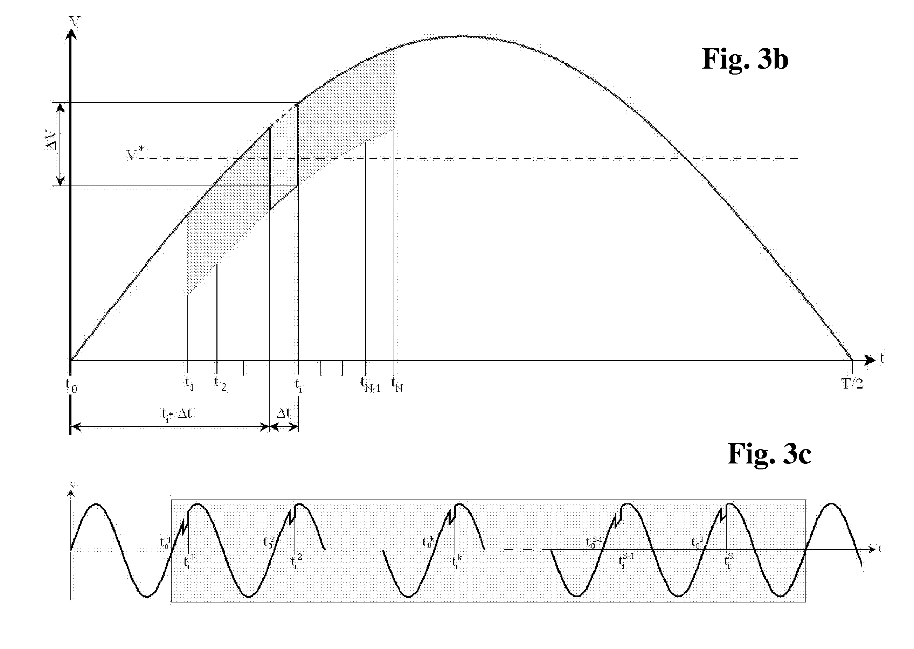

In the preferred embodiment, each transmission session is constituted by a sequence of voltage pulses, associated to each of which is one nibble, i.e., 4 bits of binary information. Each voltage pulse is generated through a rapid decrease ΔV of the mains voltage, occurring at the instant tᵢ measured starting from the instant to corresponding to zero crossing of the a.c. network voltage, as represented in Figure 3b (it may be assumed, by way of example, that the half-wave represented in Figure 3b forms part of a sinusoidal wave having a period T of 20 ms). The same concept is represented, with reference to a sequence of mains-voltage cycles, in Figure 3c.

The time tᵢ belongs to a set of predetermined time values t₁,...,t_{N}, within the duration T/2 of a half-wave of the a.c. voltage, to which there may be associated uniquely as many N information data, where N ≥ 1. In this way, a coding is implemented so that the time value tᵢ at which the variation is generated, measured starting from a predetermined condition of the a.c. voltage (zero-crossing), is advantageously uniquely representative of a predetermined information datum.

The aforesaid nibble of information is contained, in particular, in the duration of the interval comprised between the aforesaid instants to and tᵢ, there being provided 16 different possible time intervals, to which to associate the instant tᵢ of generation of the voltage pulse ΔV, corresponding to the 16 possible values that can be encoded with 4 bits (2⁴ = 16). The duration Δt of the aforesaid impulsive decrease of the mains voltage, which in Figure 3b has been deliberately amplified for reasons of greater clarity of representation, is equivalent in actual fact to a few tens of microseconds. The value of the variation of voltage ΔV is instead of the order of tens of volts, i.e., relatively limited with respect to the effective value V* of the supply voltage. For example, the predetermined value of the amplitude of the variation ΔV can be comprised in an interval that ranges from 5% to 15% of the effective value V*, preferably a value ΔV equal to approximately 20 V in the case where V* is equal to approximately 230 V.

In the example, the variation of voltage ΔV is obtained by opening the contact of a normally closed relay designated by 34 in Figure 3a and by applying an instantaneous voltage drop via appropriate means 35 (for example, a pair of Zener diodes connected in series and with common anode or cathode), controlled by a microcontroller MC1 of the circuit Ai, at the desired instant tᵢ and for a very short interval Δt (the duration Δt is preferably predetermined and sufficiently brief with respect to the period T of the wave of the a.c. voltage, advantageously from 1% to 10% of the period T). The fluctuation of the mains voltage thus obtained is transmitted through the supply cable 41 of the interlocked appliance 40 and is intercepted by the microcontroller MC2 of the control system of the appliance 40, through a detecting circuit 42 (for example, a derivative circuit in itself known in literature), which is able to apply - given a variation ΔV of the a.c. supply voltage on the cable 41 - a low-voltage signal of an impulsive type to a purposely provided digital input of the microcontroller MC2. The same microcontroller MC2, via relations stored in respective non-volatile memory means, will then see to decoding the nibble of information received through the measurement of the time interval that elapses between the instant to of zero crossing of the mains voltage, detected by means of purposely provided means 46, designed to intercept the zero-crossing signal ZC, and the instant tᵢ corresponding to the generation of the pulse ΔV.

In other words, then, at the level of the interlocked appliances 40 there occurs detection of the variation ΔV and the measurement of the time value tᵢ at which said detection occurs, measured starting from the occurrence of a predetermined condition regarding the a.c. voltage that supplies the appliance itself, i.e., the zero-crossing. Decoding then takes place by means of association of the information corresponding to the time value tᵢ.

The variation ΔV of the a.c. voltage that supplies the interlocked appliance 40 will have characteristics such as to render it distinguishable with respect to occasional fluctuations that may be present on the supply line 41 due to disturbance of various nature: in particular, the amplitude and speed of variation characterize the variation ΔV generated for transmitting information, distinguishing it from a generic variation due to external interference factors or to the nature itself of the sinusoidal wave.

For further details regarding the above-described transmission technique based upon variations/reductions of the supply voltage of the appliances 40, the reader is referred to the contents of the Italian patent application No. TO2005A000736, the teachings of which in this regard are incorporated herein for reference.

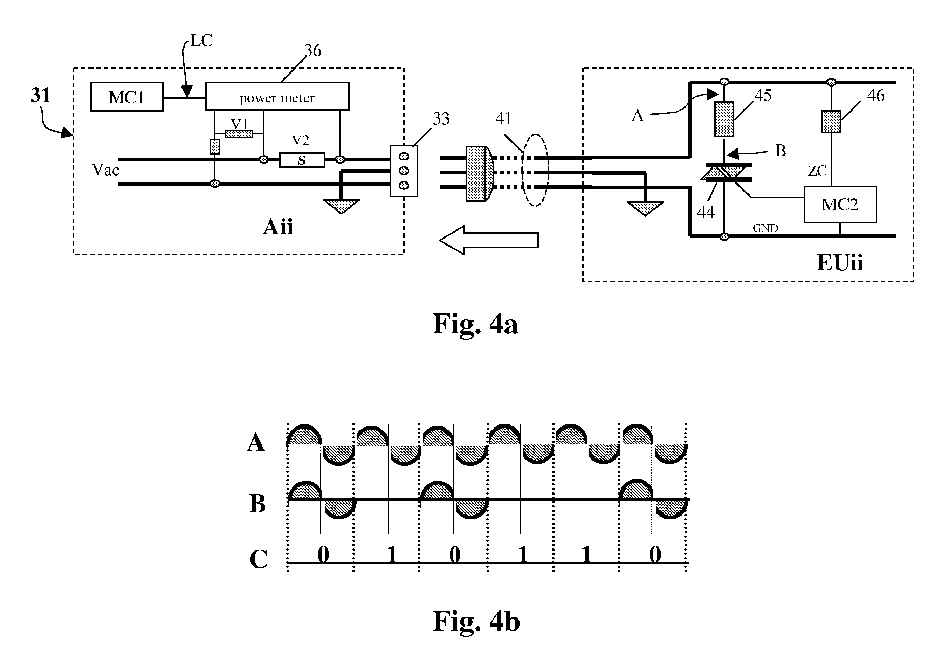

Figure 4a describes the modalities with which an interlocked appliance 40 transmits information and/or encoded binary data to a receiving circuit Aii of one of the communication arrangements 31 of the main appliance 10.

In this case, each transmission session is constituted by a sequence of controlled absorptions of electric power, carried out by applying the mains voltage Vac to a given electrical lad 45 through the triac designated by 44, managed by the microcontroller MC2 of the control system of the interlocked appliance 40, via the corresponding non-volatile memory that contains the relations used for coding the data to be sent. Said sequence of controlled absorptions of electric power, carried out within a corresponding sequence of network cycles and associated to the bits to be transmitted, results in a sequence of current flows synchronised with the mains frequency which, measured in a synchronous way with said mains frequency through a so-called "power meter" 36 of the receiver circuit Aii of the arrangement 31, enable digital signals to be obtained. Said digital signals, sent to the microcontroller MC1 through the communication line designated by LC, enable the latter to decode the information and/or the encoded binary data transmitted by the appliance 40. An example of sequence of bits transmitted by means of the aforesaid technique is represented in Figure 4b, where A designates the a.c. voltage applied between the points A and GND of Figure 4a, B designates the a.c. voltage applied across the triac 44, and C designates the corresponding sequence of bits acquired by the microcontroller MC1. In the specific case represented in Figure 4b, the aforesaid sequence of bits is formed by the binary string "010110", in which to each logic "1" there corresponds activation of the triac 44 for the entire corresponding network cycle, and likewise to each logic "0" there corresponds deactivation of the triac 44 for the entire corresponding network cycle.

For greater details regarding said transmission/reception technique, the reader is referred to the already mentioned WO 02/21664 and WO 02/21660, the teachings of which in this regard are incorporated herein for reference.

As has been mentioned, the measurement means 36 can be constituted by commercial electronic devices generally referred to as "power meters", which are able to measure various electrical quantities, such as power and/or current and/or voltage and/or energy, as well as the zero-crossing signal of the voltage, and to interact, by means of a suitable bidirectional communication line LC, with a microcontroller MC1.

Returning now to Figure 1, it may be noted how to each distribution device 33 there is associated a communication arrangement 31, and hence a corresponding power meter 36. In this way, also in the case where at least one of the interlocked appliances 40 does not have available means to communicate through its own supply cable 41 with the main appliance 10, the corresponding power meter 36 can in any case measure the electrical quantities associated to operation of said interlocked appliance, amongst which, for example, the consumption of electrical energy for a given period of time and/or the instantaneous electric power and/or the instantaneous electrical current and/or the supply voltage and/or the phase displacement angle between the a.c. voltage applied to said interlocked appliance 40 and the corresponding absorbed current.

Given that the control system of the main appliance 10 is able to measure the value of the electric power absorbed by each of the interlocked appliances 40, it is also able to know, instant by instant, the total value of the power absorbed by the set of the appliances 40. This enables the control system 20, 30 of the main appliance 10 to compare said total value of absorbed power with a given reference value, either pre-set or else selected by the user through the interface UI, and identify the situations in which the value of the total power absorbed by the system exceeds the aforesaid reference value.

Hypothesising the case where all the interlocked appliances 40 are able to exchange information with the main appliance 10, the control system 20, 30 of the latter can signal, to the control systems of the interlocked appliances 40, all the situations in which the value of the total power absorbed exceeds the aforesaid reference value, enabling each interlocked appliance 40 to reduce its own power absorption by an amount that, on the one hand, does not jeopardize the performance of the appliance itself and, on the other, contributes to bringing the total power absorption back to below the aforesaid reference value. In the case where said reference value coincides with the maximum power that can be supplied (envisaged, for example, by the contract of supply of electric power for the dwelling in which the system 1 is installed), the operation of "self-reduction" of power absorbed by the interlocked appliances 40 enables prevention of a possible black-out caused by excessive consumption of electrical energy (see in this regard the already cited US-B-6,487,509). Said operation of control of the total power absorbed by the system 1 is complementary to and synergistic with the one, described previously, regarding the situations of excessive power absorption with respect to the potentialities of a given electrical line, signalled by a reduction of the value of the mains frequency.

The aforesaid measurements made by the control system of the main appliance 10 of electrical quantities associated to operation of each of the interlocked appliances 40 can be appropriately stored in the non-volatile memory means NVM that the digital control system 20, 30 has available. Said information can moreover be displayed on the local user-interface means UI, either automatically or upon request of the user, and/or sent, through the further communication means 50, to the external apparatuses or devices 55, 59 of Figure 2a, which are possibly present in the same domestic environment in which the system 1 is located, or else again to the remote apparatuses or devices 61, 62 of Figure 2b, which are able to interact with the main appliance 10 and, via this, with each of the electrical appliances 40 connected thereto and are able to communicate according to what has been described previously. Interaction between the possible remote apparatuses or devices 61, 62 can occur through the Internet, for example, with the aid of a "home gateway" connected to the domestic network 28 or 50, or else - as has been said - can be based upon the GSM/GPRS wireless technology through a direct connection, or yet again by means of mediation of the Internet.

The devices 59 possibly present in the same domestic environment in which the system 1 is installed can be represented, purely by way of non-limiting example, by cellphones and/or PDAs and/or portable personal computers and/or any other device designed to interact with the communication network 50, to interact with the user, and to exchange information with the outside world through the Internet. Likewise, the apparatus 55, possibly present in the same domestic environment in which the system 1 is installed, can be represented, purely by way of non-limiting example, by interactive television sets and/or personal computers and/or multimedia systems (for example, the Windows Media Center® system produced by Microsoft or similar multimedia apparatuses) and/or video-game systems and/or any other fixed or mobile system designed to interact with the communication network 50, to interact with the user and to exchange information with the outside world through the Internet.

As has been said, the apparatuses or devices 61, 62, which are able to interact, in a direct way or else via the Internet, with the system 1 through GSM/GPRS wireless technology, can be represented, purely by way of non-limiting example according to the present invention, by personal computers and/or cellphones.

In a preferential embodiment of the present invention, the main appliance 10 is represented by a kitchen hood, which can be indifferently a suction hood or else a filtering hood, and the one or more interlocked appliances 40 are represented by other electrical household appliances, such as, for example, refrigerators and/or fridges-freezers and/or electrical ovens and/or microwave ovens and/or gas ovens and/or electrical cooking hobs and/or gas cooking hobs and/or dish-washers and/or any other electrical household appliance typically installed in a kitchen.

It is recalled that, by the term "hood" is meant an electrical appliance, traditionally installed within a domestic kitchen, which habitually comprises the following functional groups:
i) a suction system, which constitutes the means through which the hood gathers the fumes and vapours coming from an underlying cooking hob and which generally comprises a ventilating assembly, for example, a rotary turbo-machine (formed by the combination of an electric motor, an impeller and a volute) that causes the air to acquire kinetic energy through aerodynamic action;
ii) a control system, which manages functionality of the electrical household appliance and is operatively connected to the user interface;
iii) a filtering system, which enables purification of the aspirated air by means of absorption of the particulate that constitutes the fats and the odours; and
iv) a casing, which constitutes the means of physical joining and protection of the other functional groups and that determines the aesthetic appearance of the hood.

There is frequently present also a lighting system, which enables generation of light for illumination of the cooking hob through the electrical supply of one or more lamps.

It is likewise recalled that a hood is defined as "suction hood" if the aspirated air is conveyed, by means of a purposely provided ducting, to the outside of the environment in which the hood is installed, whilst it is defined as "filtering hood" if the air sucked in, after being purified, is sent back into the environment in which the hood is installed.

The user, by acting on the interface UI associated to the aforesaid hood, can thus interact, not only with the latter, but also with any other electrical household appliance 40 that is able to communicate, through its own supply cable 41, with the same hood 10. A particular case of said preferential embodiment of the present invention is represented by the fact that the electrical household appliances 40, which receive the electrical supply from the hood 10 and interact therewith through the respective supply cables 41, are built-in electrical household appliances and by the fact that, as has been said, they are built into the cabinet of the kitchen.

In other possible embodiments, the main appliance 10 can be represented by a refrigerator, fridge-freezer, oven, dish-washer, cooking hob, washing machine, spin dryer, system for air conditioning of the environment, or again, in general, any other electrical household appliance.

A possible variant of the preceding embodiments, designed to simplify the control system 20, 30, and hence to reduce the cost thereof, is represented by the fact that the transmission of information and/or encoded data from the main appliance 10 to the one or more interlocked appliances 40 - instead of being carried out through a number "n" of sets of the means 34, 35 represented in Figure 3a and associated to each communication arrangement 31 (or transmission circuit Ai) - is carried out through a single set of the means 34, 35, set upstream of the various arrangements 31 and managed by the microcontroller MC. In this case, the communications of the control system of the main appliance 10 will be sent no longer in *point-to-point mode,* but in *point-to-multipoint mode* and will be received simultaneously by each of the interlocked appliances 40. Consequently, a protocol of a multipoint type must be adopted, and a specific physical address must be assigned to each of the interlocked appliances 40.

A further possible variant of the preceding embodiments, designed to simplify further the control system of the main appliance 10, and hence reduce the cost thereof, is represented by the fact that the functions performed by the "n" microcontrollers MC1, each associated to a respective communication arrangement 31, can be performed by a single microcontroller, which, as a particular case, can coincide with the main microcontroller MC of the appliance 10.

From the foregoing description, the characteristics and advantages of the present invention emerge clearly, principally represented by the fact that:
- the problems of encumbrance, accumulation of dust, and the risks typical of the solution according to WO 02/21660 are overcome;
- the user interface UI proper to the appliance 10 can be exploited directly both for display of the electrical quantities of the appliances 40 and for managing the interaction, by a user, with the control systems of said appliances 40;
- the communications technique based upon variations of the supply voltage from the main appliance 10 to the interlocked appliances 40 does not lead to problems of electromagnetic compatibility.

As regards the latter aspect, it is emphasized that the variations of the supply voltage generated by the main appliance 10 do not produce any significant disturbance in regard to the power mains 28, since they are of limited degree with respect to the instantaneous value of the supply voltage, and consequently do not require filtering systems for observance of the standards of electromagnetic compatibility. The limited extent of said reductions does not moreover determine an appreciable reduction in the flow of energy that supplies the interlocked appliance or appliances 40. It is consequently possible to make transmissions in sequence with a frequency equal to that of the a.c. supply voltage, i.e., transmitting information in each period of the a.c. supply voltage, without the need to interrupt entire voltage waves.

It is clear that numerous variations, which will be evident for the person skilled in the art, may be made to the electricity-consuming appliance and to the system of electricity-consuming appliances described by way of example, without thereby departing from the scope of the invention, as defined in the ensuing claims.

## Claims

1. An electricity-consuming appliance, in particular an electrical household appliance, designed for connection to a power mains (28) for being supplied thereby with an a.c. voltage and having:
- an electronic control system (20, 30), comprising a microcontroller (MC) operative for managing characteristic functions of the appliance (10), such as for example aspiration of cooking fumes in the case of a hood, washing of dishes in the case of a dish-washer, washing and/or drying of laundry in the case of a machine for washing and/or drying laundry, control of heating/ventilation elements in the case of an oven, production of cold in the case of a refrigerator;
- electrical distribution means (33), configured for supplying to one or more further autonomous electricity-consuming appliances (40) the electric power necessary for the corresponding operation, the distribution means (33) being prearranged for connection to an electric-power supply cable (41) of a respective said further appliance (40);
- means for measuring one or more electrical quantities (36) associated to operation of a respective said further appliance (40), said means being operatively connected to said microcontroller (MC).

2. The electrical appliance according to Claim 1, further comprising a user interface (UI), operatively connected to said microcontroller (MC) and prearranged for enabling a user of the appliance itself to interact with said control system (20, 30), the user interface (UI) in particular comprising display means and input means.

3. The electrical appliance according to Claim 2, wherein the control system (20, 30) is prearranged for enabling display on said user interface (UI) of indications representing the result of measurements made by said measurement means (36), i.e., of electrical quantities relating to the operation of a respective said further appliance (40).

4. The electrical appliance according to Claim 1, wherein said electrical quantity or quantities is/are selected from amongst power, current, voltage, energy, and phase displacement between voltage and current.

5. The electrical appliance according to Claim 4, further comprising at least one of means (FD) for measuring possible variations of the mains frequency and means (36) for detecting zero crossing of the a.c. voltage that can be supplied via said distribution means (31).

6. The electrical appliance according to Claim 1, wherein the control system (20, 30) is further prearranged for exchange of information and/or encoded data with at least one said further appliance (40).

7. The electrical appliance according to Claims 3 and 6, wherein the control system (20, 30) is further prearranged for enabling at least one of:
- display, on said user interface (UI), of indications regarding said exchange of information and/or data; and
- input, through said user interface (UI), of instructions or commands pertaining to said exchange of information and/or data.

8. The electrical appliance according to Claim 6 or 7, wherein the control system (20, 30) is prearranged for carrying out said exchange of information and/or data using as transmission means the supply cable (41) of a respective said further appliance (40), particularly via *power-modulation* or *power-line* communication technique, or else in a wireless mode.

9. The electrical appliance according to Claim 8, wherein the control system (20, 30) comprises at least one communication arrangement (31) to provide said exchange of information and/or data, which include said measurement means (36), and preferably a plurality of said communication arrangements (31), each arrangement being connected in series between said power mains (28) and a respective connection device (33).

10. The electrical appliance according to at least one of the preceding claims, wherein the control system (20, 30) is further prearranged for the exchange of information and/or encoded digital data with at least one of a home communication network (28; 50) and an apparatus and/or device different from said further appliance or appliances (40), such as a device having respective means for interaction with a user and/or with the Internet, for example, a mobile telephone, a PDA, a portable computer, a television set, a multimedia system, a video-game system.

11. The electrical appliance according to Claims 3 and 10, wherein the control system (20, 30) is further prearranged for enabling at least one of:
- display, on said user interface (UI), of indications regarding said exchange of information and/or data; and
- input, via said user interface (UI), of instructions or commands pertaining to said exchange of information and/or data.

12. The electrical appliance according to Claim 1, wherein said distribution means comprise one or more connection devices (33), each connection device being prearranged for electrical connection with the supply cable (41) of a respective said further electrical appliance (40) and comprising in particular at least one of:
- a socket (33) prearranged to receive a plug belonging to the supply cable (41) of a respective said further appliance (40);
- a set of three terminals, associated respectively to the live, neutral and earth of said power mains (28),
where in particular
- associated to each connection device (33) is a respective device for measuring at least one electrical quantity (36), and/or
- said distribution means comprise two or more of said connection devices (33).

13. The electrical appliance according to Claim 8, wherein said distribution means (33) are provided for supplying an a.c. voltage, and the control system (20, 30) comprises:
- first means (MC1; MC), for associating to a time value (tᵢ) a piece of information to be transmitted, where said time value (tᵢ) is comprised in a set of predetermined time values (t₁,...,t_{N}) and where said predetermined time values (t₁,...,t_{N}) are measured starting from the occurrence of a predetermined condition relating to the a.c. voltage of said power mains (28); and
- second means (34, 35) for generating at least one variation (ΔV) of the a.c. voltage that can be supplied via said distribution means (33) to said further electrical appliance (40) substantially at said time value (tᵢ).

14. The electrical appliance according to Claim 13, wherein said first and second means (34, 35) are prearranged to cause a reduction of the a.c. voltage that can be supplied via said distribution means (33) and for interrupting said reduction of voltage substantially at said time value (tᵢ), said reduction of voltage being in particular maintained for a predetermined period of time (Δt).

15. The electrical appliance according to Claim 13 or 14, wherein
- said first and second means (33, 34) are provided for generating, within one and the same period of the a.c. voltage, two or more variations or reductions (ΔV) of the voltage that can be supplied via said distribution means (33), and/or
- said variation or reduction of the supply voltage has a predetermined amplitude (ΔV).

16. The electrical appliance according to Claims 5 and 13, wherein said predetermined condition is the zero crossing of the a.c. voltage that supplies said electrical appliance (10).

17. The electrical appliance according to any one of Claims 16 to 19, wherein said information is constituted by a set of bits, particularly four bits.

18. The electrical appliance according to at least one of the preceding claims, **characterized in that** it is an electrical household appliance (10), such as a kitchen appliance, particularly a kitchen hood (10).

19. A system of autonomously operating electrical appliances, i.e., appliances designed to perform respective characteristic functions autonomously, particularly electrical household appliances, designed to be supplied with an a.c. electrical voltage, the system (1) comprising said electrical appliance (10) and one or more of said further electrical appliances (40) according to one or more of Claims 1 to 18, where in particular said further electrical appliance or appliances (40) is/are electrical household appliances, particularly kitchen appliances.

20. The system according to Claim 19, wherein at least one of said further electrical appliances (40) comprises:
- a respective electronic control unit (MC2);
- respective means (46) for detection of said predetermined condition, operatively connected to said electronic control unit (MC2);
- a detection circuit (42), prearranged for detecting said variation or reduction (ΔV) of the a.c. voltage and sending, following upon said detection, a corresponding signal to said electronic control unit (MC2),
wherein the electronic control unit (MC2) is designed to detect the time value (tᵢ) in which it receives said signal from said detection circuit (42).

21. The system according to Claim 20, wherein said electronic control unit (MC2) is configured for carrying out a decoding of the information associated to said time value (tᵢ) on the basis of relations contained in non-volatile memory means operatively associated to the unit itself.

22. The system according to at least one of Claims 19 to 21, wherein said control system (20, 30) is prearranged for:
- detecting possible heavy situations of supply of the electric power, associated to reduction in the value of the mains frequency of said power mains (28) with respect to its nominal value; and communicating the existence of said heavy situations to one or more of said further appliances (40), and/or
- communicating to at least one of said further appliances (40) the existence of a possible excessive local power absorption, with respect to a defined maximum limit, and said at least one further appliance (40) is configured for reducing accordingly the respective consumption of electrical energy, compatibly with the function that it is currently performing.
